# EUROPEAN PATENT SPECIFICATION

(11) **EP 1 454 536 B1**
(45) Date of publication and mention of the grant of the patent: **14.05.2008**
(21) Application number: 04251069.3
(22) Date of filing: 26.02.2004
(51) Int. Cl.: A23K 1/10, A23K 1/18, A01K 15/02, C14C 15/00

(54) **Method for processing pet product**
Verfahren zum Verarbeiten von Produkten für Haustiere
Méthode de traitement de produits pour animaux de compagnie

(30) Priority: 05.03.2003 CN 03105174
(43) Date of publication of application: 08.09.2004
(73) Proprietor: Shangwu-liu, Lingxi Town Cangnan County Zhejiang Province 325800 (CN); Zuxi-chen, Shuitou Town Pingyang County Zhejiang Province 325405 (CN); Qinglin-zhou, Nanyan Town Pingyang County Zhejian Province 325406 (CN); Jinchun-su, Aojiang Town Pingyang County Zhejiang Province 325401 (CN)
(72) Inventor: Shicai-liu, 325800 Canagnan County Zhejiang Province (CN); Zuxi-chen, 325405 Pingyang County Zhejiang Province (CN); Qinglin-zhou, 325406 Pingyang County Zhejiang Province (CN); Jinchun-su, 325401 Pingyang County Zhejiang Province (CN)
(74) Representative: Robson, Aidan John

(56) References cited:
- WO-A-01/33972
- FR-A- 993 300
- FR-A- 1 009 813
- US-A- 1 893 706
- US-A1- 2002 142 079
- US-A1- 2002 142 091
- US-A1- 2003 198 731

## Description

### FIELD OF THE INVENTION

The present invention generally relates to pet products, and particularly to a method and apparatus for processing a pet product made of the second and/or deeper layer of animal peltry.

### BACKGROUND OF THE INVENTION

A dog chew is a type of pet product made of animal peltry. The material used to make dog chews often includes the first to the fourth layers of pigskin. A conventional method for manufacturing pork-hide dog chews may include the following steps. First, rawhide is subject to defatting and depilation treatment. Then, the hide is split to obtain the first, second, third, and fourth layers of rawhide materials. Next, the first, second, third, and/or fourth layers of the rawhide materials may be defatted, rinsed, and dried (e.g., through sunbath) to make a finished hide product. Then, the finished hide product may be cut, soaked, pleated, shaped, and dried to form a shaped animal hide product. Next, the shaped animal hide product is smoked and baked (or barbecued) for dyeing and flavoring, thereby obtaining finished pork hide dog chew products.

The foregoing described method utilizes the first layer of pigskin as raw materials. However, the first layer of pigskin is costly and is often used to make more expensive leather products. Using the first layer of pigskin to make pet products, therefore, is not economically and financially sound. Moreover, the foregoing described method includes time consuming procedures such as depilation and the like, thereby increasing the manufacturing cost. In addition, the foregoing described method often involves a baking (or barbecuing) procedure, which may make final dog chew products less appealing to the dog because baking (or barbecuing) may destroy the flavor of the dog chew product. Further, the foregoing described method often utilizes smoking equipment including a smoke generator for generating smokes, a smoke box for containing the smoke, a box rack for supporting the shaped hide product in the smoke box, and a box cover for containing and redirecting the rising smoke. Because of the limited amount of products being smoked at the same time within the smoke box, and the fact that the box cover has to be opened each time a new product is put into the smoke box for smoking, the work efficiency is often not high.

Therefore, it would be desirable to provide a method for processing a pet product made of the second and/or deeper layer of animal peltry, which may reduce the manufacturing cost, improve working efficiency, streamline the pretreatment, molding and post-treatment procedures, and better color and flavor the pet product. Similar pet products found in the prior art include those produced by processes described in WO 01/33972.

### SUMMARY OF THE INVENTION

In an exemplary aspect of the present invention, a method for processing a pet product includes the steps of pretreatment, molding and post-treatment of the second and/or the deeper layers of animal peltry. The step of pretreatment includes the following processes: defatting and delaminating animal peltry, intenerating animal peltry with intenerate reagent, and rinsing animal peltry by water until the animal peltry's pH value is from 5 to 8 to obtain a waterish animal peltry. The intenerating and rinsing process may be performed in a rotational drum. The step of molding may be performed by the way of a waterish molding method or a dry molding method. The waterish molding method is a process of waterish animal peltry molding or a process of waterish grainy animal peltry molding. The process of waterish animal peltry molding may include the procedure of dripping water from the waterish animal peltry, cutting the waterish animal peltry and then molding by the way of knitting. The process of waterish grainy animal peltry molding may include the procedure of dripping water from the waterish animal peltry, crumbling it into smash pieces (every piece less than 7 illimeters), agglutinating with adhesive and then molding by the way of pressing or squeezing with machine. Dry molding is a process of dry animal peltry molding or a process of dry grainy animal peltry molding. The process of dry animal peltry molding includes the procedure of sun-drying the waterish animal peltry and then cutting, soaking and molding by the way of knitting or pressing with machine. The process of drying grainy animal peltry molding includes the procedure of sun-drying the waterish animal peltry and then crumbling it into smash pieces (the piece is less than 7 millimeters), agglutinating with adhesive, and molding by the way of pressing or squeezing out with machine. A semi-finished pet product is obtained through the step of molding. The step of post-treatment including sun-drying and drying the semi-finished pet product or drying until the product contains water less than 15%.

A rotating drum may be used in a method for processing a pet product and may include following elements: outlets 1, inlets 2, driving equipment for rotating the rotating drum which is positioned at a side of the drum, board 3 or stake 4 inside the drum for helping to mix the animal peltry. The drum is horizontally placed. The drum's diameter and length are from 2 to 4 meters, and the ratio between the length and the diameter is preferably from 1.1 to 1.2.

A smocking stove may be used in a method for processing a pet product and may include the following elements: a stove door 11, an entrance/exit 12 for the animal peltry product, a vent 13 positioned at the top of the smoking stove for venting smoke, a vehicle 14, layers of shelves 15 for placing animal peltry products (animal peltry products may be carried in and out of the smoking stove by the vehicle 14 on a pair of trajectories 16), a tray 17 for placing the smoking fuel, and a heater 18. Preferably, the shape of the smoking stove is cuboids.

### BRIEF DESCRIPTION OF THE DRAWINGS

The numerous advantages of the present invention may be better understood by those skilled in the art by reference to the accompanying figures in which:
FIG. 1 shows a rotating drum in accordance with an exemplary embodiment of the present invention;
FIG.2 is a cross sectional view of the rotating drum shown in FIG. 1 along the direction of B-B of FIG. 1;
FIG.3 shows stakes inside the rotating drum shown in FIG. 1;
FIG.4 is a cross sectional view of a smoking stove in accordance with an exemplary embodiment of the present invention; and
FIG. 5 is a top plan view of the smoking stove shown in FIG. 4 along the direction of A-A of FIG.4.

### DETAILED DESCRIPTION OF THE INVENTION

Reference will now be made in detail to the presently preferred embodiments of the invention, examples of which are illustrated in the accompanying drawings.

The method and apparatus provide by the present invention is simple and ingenious and may efficiently solve many difficulties involved in pet product processing. The present invention efficiently uses the second and/or the deeper layers of animal peltry as raw materials. Such animal peltry may include cowhide, pig hide, horsehide, mule hide, and the like, which may be easily gained as a byproduct in a tannery. Thus, the present invention may greatly reduce the manufacturing cost, and at the same time, may save economic resources and protect the environment. The present invention may provide better working procedures and more molding methods to gain more kinds of pet products. The rotating drum may efficiently meet the need of the process of intenerating, defatting, rinsing, emending color in the step of pretreatment. A vehicle included in the smoking stove may transport animal peltry products so expediently that the amount of peltry products being smoked may be greatly increased, thereby resulting in high efficiency.

The method of the present invention includes the steps of pretreatment, molding and post-treatment. The present method uses the second and the deeper layers of cowhide, pig hide, horsehide, mule hide and the like as raw materials. The first layer of animal peltry may be used for making leather products such as clothes, handbags, shoes, and the like. Because there is much fat remaining on the animal peltry, a process of defatting by a special plane is needed in pretreatment. In a process of delaminating, the animal peltry is cut into layers of different thickness according to the request of techniques. In a preferred embodiment, if the length of finished pet product is from 5 to 40 centimeters, the thickness of animal peltry may be from 3 to 6.5 millimeters.

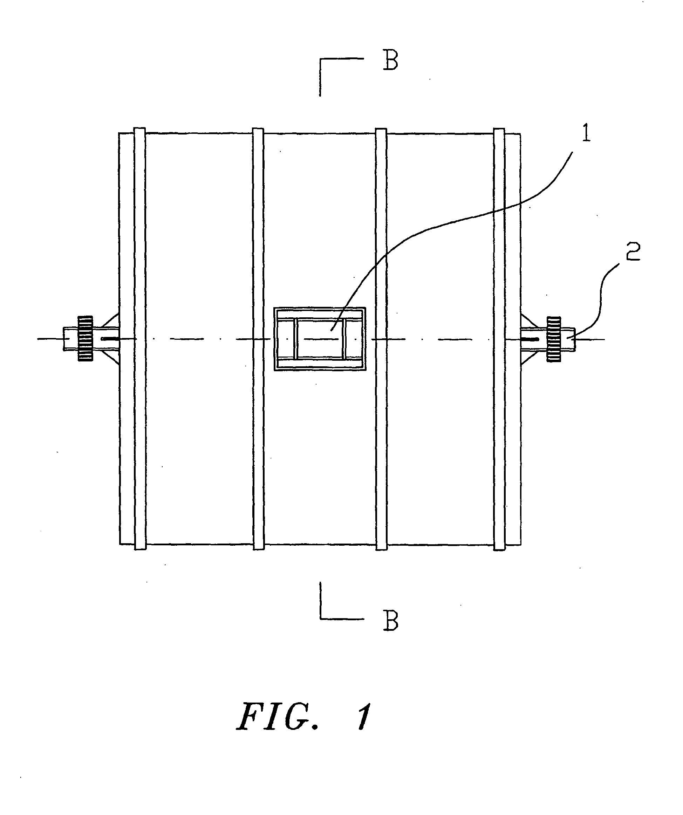

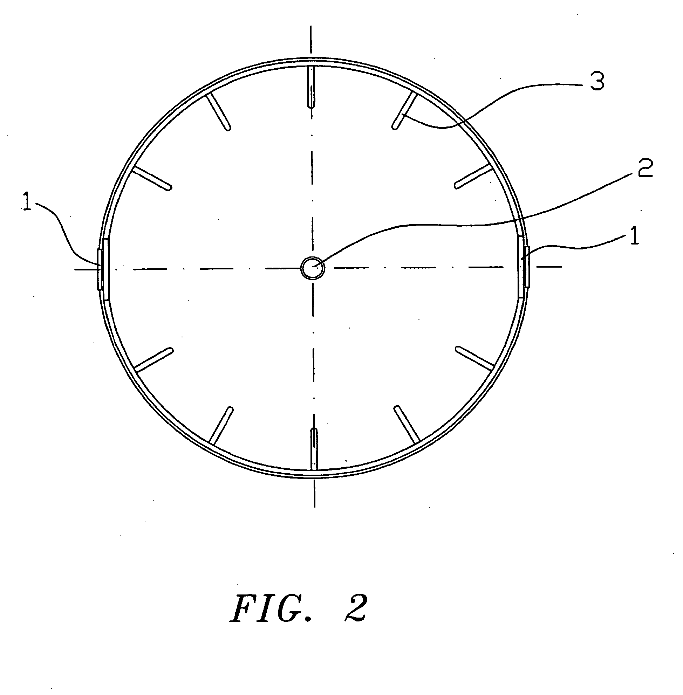

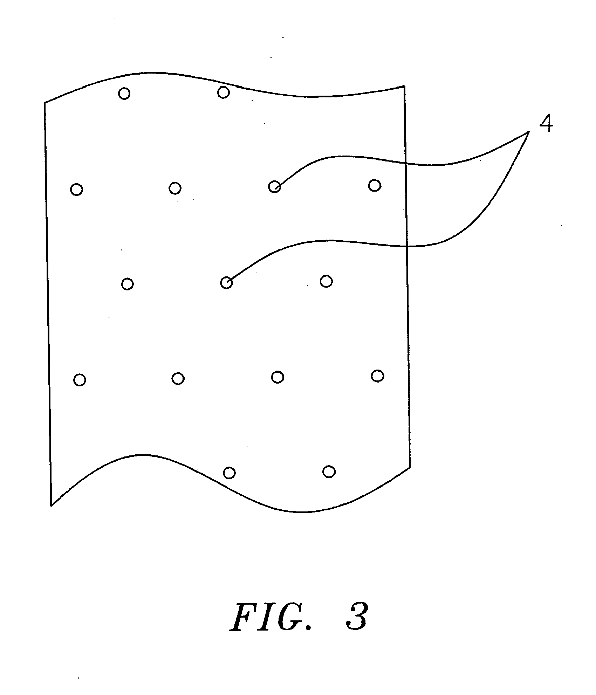

Then, the process of intenerating and rinsing the material animal peltry in a rotating drum is followed. FIG. 1 shows a rotating drum in accordance with an exemplary embodiment of the present invention; and FIG.2 is a cross sectional view of the rotating drum shown in FIG. 1 along the direction of B-B of FIG. 1. As shown in FIGS. 1 and 2, the drum may be made of wood and may be positioned horizontally. The drum may be alternatively made of plastic, metal, or the like. The drum may include two outlets 1, two inlets 2, and driving equipment, which may be set at one side of the drum. The two outlets 1 are symmetrically placed in the middle of the drum for putting in material and draining water conveniently. The two inlets 2 are placed partially inside a pipe, which is an axis of the drum. The drum has a diameter of 2 ~ 4 meters and a length of 2 ~ 4 meter. Preferably, the ratio between the drum length and the drum diameter is 1.1 ~ 1.2. There are some structures inside the drum for helping to mix the animal peltry and the liquid fully. If the structure is a board 3 (see FIG. 2), then the board 3 may include 6 ~ 12 bars, which are positioned at an equal distance along the axis of drum. If the structure is a stake 4 (see FIG. 3), then the stake may be crossed and starlike, positioned at an equal distance along the radial of the drum. The horizontal space between the stakes 4 may vary from 55 to 65 centimeters along the axis direction of the drum and may vary from 50 to 60 centimeters along the radial direction of the drum. The length of the boards 3 and the stake 4 is from 20 to 25 centimeters. Preferably, rotating speed of the drum is kept between 7-12 rpm (rotation per minute) to achieve a desired result.

In the intenerating process of the pretreatment step, the ratio among the animal peltry, intenerating-reagent, and water is (75-85) shares / (1.5-2.5) shares / (10-20) shares, the share being defined by weight. The drum is first rotated for 30 ~ 90 minutes, then infusing water is transported into the drum, and then wastewater is drained out until the animal peltry's pH value is from 5 to 8. If there is too much fat on the animal peltry, a process of degreasing is added between intenerating and rinsing. The ratio among the animal peltry and degreasing-reagent and water is equal to (90-100) shares / (0.5-1.5) shares / (11-20) shares, the share being defined by weight, and the drum is kept rotating for 40-60 minutes. If it is necessary, the process of emending color is added after the process of rinsing in the step of pretreatment. In the process of emending color, when the ratio among the animal peltry and emending color reagent and water is equal to (80-90) shares / (1.2-1.8)shares / (10-15) shares, the share being defined by weight, then the true color waterish animal peltry is achieved; when the ratio among animal peltry and emending color reagent and water is (80-90) shares / (12-20) shares / (6-15) shares, the share being defined by weight, then white color waterish animal peltry is achieved. Preferably, the process of emending color occurs in the rotating drum for 240-300 minutes. That is, the drum is kept rotating and at rest for 240-300 minutes in total, and the ratio between rotating time and rest time is 1/3. And then the animal peltry is rinsed by water again until the animal peltry's pH value is from 5 to 8. The above mentioned emending color reagent is H₂O₂ to avoid polluting the environment.

A molding step is followed after the step of pretreatment. The step of molding may be performed by either a waterish molding method or a dry molding method. The waterish molding method is a process of waterish animal peltry molding or a process of waterish grainy animal peltry molding. The process of waterish animal peltry molding includes the process of dripping off water from the waterish animal peltry, cutting and then molding by the way of knitting. Considering the fact that the animal peltry may be shrunk, the animal peltry need be a little bigger than the needed size in the process of cutting. Preferably, when the desired pet product length is 2-40 centimeters, the length of the animal peltry piece need be 16-140 centimeters, and the width need be between 2.5 and 20 centimeters in accordance with different sizes. The process of waterish grainy animal peltry molding includes the procedure of dripping off water from the waterish animal peltry, crumbling the peltry into smash pieces (each piece less than 7 millimeters), agglutinating with adhesive, and then molding by the way of pressing or squeezing with machine. In the process of waterish grainy animal peltry molding or the process of dry grainy animal peltry molding, the adhesive is made of sticky rice powder or edible tapioca. Preferably, the ratio among the sticky rice powder or edible tapioca and glutin and water in the adhesive is (70-80) shares / (1-2) shares / (50-60) shares, and the ratio between the grainy peltry and adhesive is (75-90) shares / (10-25) shares, the share being defined by weight. It is understood that the weight of the grainy animal peltry does not include the weight of water. The process of adding edible pigment and monosodium glutamate into the adhesive may be added to make the pet product more pleasant.

The dry molding method is a process of drying animal peltry molding or the process of drying grainy animal peltry molding. The process of drying animal peltry molding includes the procedure of sun-drying the waterish animal peltry and cutting and then molding by the way of pressing with machine, or by knitting. In general, the length of the animal peltry piece after cut is from 16 to 140 centimeters, and the width is from 2.5 to 20 centimeters according to the needed size. The thickness of the dry animal peltry is between from 0.8 to 2 millimeters. When the desired length of the finished pet product is from 5 to 33 centimeters, the length of the dry animal peltry need be from 5.5 to 35.5 centimeters, the width is from 4 to 28 centimeters, and the thickness is from 0.8 to 2 millimeters. When the pet product is a twist product, the width of the animal peltry after cut need be from 0.9 to 12 centimeters. The process of soaking should be kept from 2 to 10 minutes to make the animal peltry to contain water from 25% to 40%. The process of drying grainy animal peltry molding includes the procedure of sun-drying the waterish animal peltry and crumbling it into smash pieces (each piece less than 7 millimeters), agglutinating with adhesive, and molding through pressing or squeezing out with machine. The adhesive is the same as in the above-mentioned process of waterish grainy animal peltry molding. The edible pigment and monosodium glutamate may be added into the adhesive too.

In the step of post treatment that follows the step of molding, the process of drying may be performed by the way of sun drying and drying or the way of drying only in a drying-room. In the drying-room, the semi-finished pet product should be placed apart on different layers to avoid the semi-finished pet product from piling up. The space between the layers in the drying-room is from 12 to 20 centimeters and the height of the drying-room may not exceed than 2.8 meters. In the process of drying, the temperature is kept between 35-65°C (Celsius) for 24-48 hours first, then is increased gradually to 75°C (Celsius) during 36-48 hours, thereby resulting in a finished pet product containing water less than 15%.

After the step of post-treatment, a process of smoking is followed to increase the color and flavor of the finished pet product. The process of smoking that occurs in a special smoking stove is kept for 5-30 minutes while the temperature is kept from 80 to 120°C (Celsius). In the process of smoking, a sawdust smoke fuel and a sugar fuel are selected to make up the smoking fuel, the sawdust fuel being from 40 to 60 shares, and the sugar fuel being from 35 to 60 shares. Then, water that weighs from 3 shares to 10 shares is mixed with the smoking fuel, the share being defined by weight. When the animal peltry to be smoked is from 90 to 100 shares, smoking fuel of 1 to 3 shares is needed, the weight excluding water. The above mentioned sugar fuel can be made of one and more kinds of sugar material according to different needed flavor.

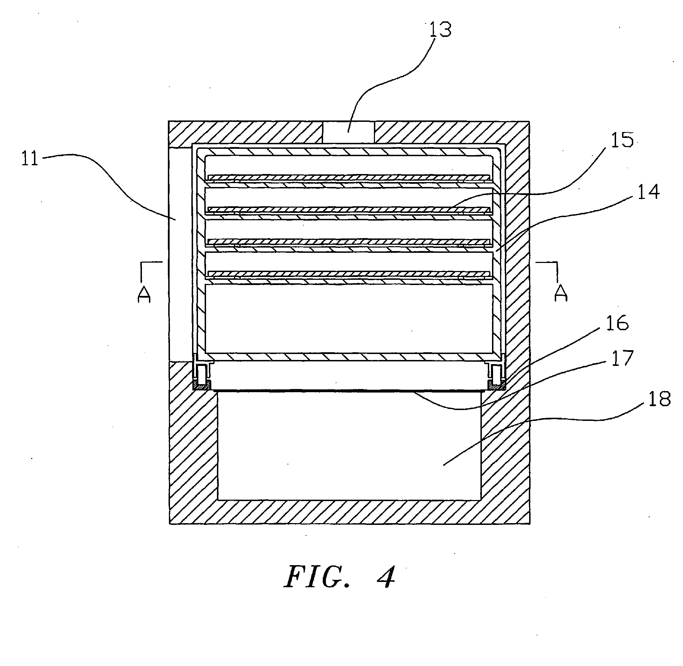

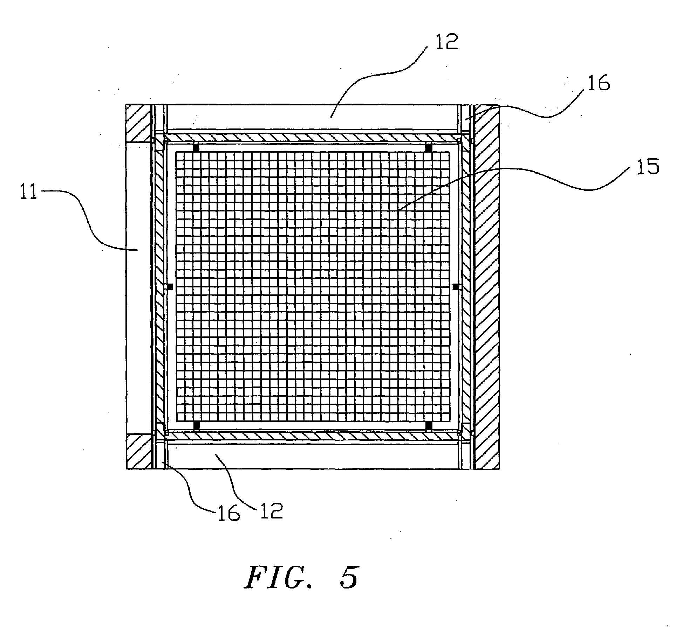

Smoking occurs in a smoking stove, as shown in FIG.4 and FIG.5. The smoking stove may include a stove door 11, an entrance/exit 12 for letting the product into and out of the stove, a vent 13 positioned at the top of the smoking stove, a vehicle 14 for transporting product into and out of the stove, layers of shelves 15 for placing animal peltry products (animal peltry products may be carried into and out of the smoking stove by the vehicle 14 through a pair of trajectories 16), a tray 17 for placing the smoking fuel, and a heater 18 for generating heat. The smoking stove may include two vehicles 14 to work continuously and improve efficiency. The shape of the smoking stove is cuboids. The length of the smoking stove's hearth is from 1.8 to 2.5 meters, the width is from 1.8 to 2.5 meters, and the height is from 1.65 to 2.3 meters. The diameter of the vent is from 0.25 to 0.35 meters. To emit the smoke expediently, more than one vent may be included on the smoking stove. The space between the layers of the shelves 15 is from 0.25 to 0.3 meter, and the space between the tray 17 and the lowest shelf 15 is from 0.5 to 0.8 meter. When smoking, the pet product that needed to be smoked is placed on the layers 15 on the vehicle 14 and then the vehicle 14 is pushed into the smoking stove. The smoking fuel is bestrewed on the tray 17, and the door 11 is closed. The heater 18 is stared-up to make the smoking fuel burning inadequacy and smoke quickly. After a prescriptive time on the condition of prescriptive temperature, the smoked pet product is achieved.

### A. Embodiment 1

The raw material is a pig hide. The pig hide is cut into three layers by machine after being defatted by a plane. Then the pig hide that weighs 1,500 kilograms is placed into the rotating drum, and at the same time, intenerating-reagent that weighs 40 kilograms and water that weighs 250 kilograms are placed into the drum too. The drum is started to rotate and kept rotating at the speed of 9 rpm for 30 minutes. Then, the residue is drained out of the drum. Degreasing reagent that weighs 15 kilograms and water with a weight of 250 kilograms are placed in the drum before the drum gets restarted. Then the drum is kept rotating at the speed of 9 rpm for 40 minutes. After the wastewater is drained out, the process of rinsing follows until the animal peltry's pH value is 6. Then, emending color reagent weighing 300 kilograms and water weighing 150 kilograms are placed into the drum. The drum is kept rotating at the speed of 9 rpm for 240 minutes. The obtained white waterish animal peltry is then going through the process of waterish animal peltry molding. In the process of molding, water is first dripped off from the waterish animal peltry, then the animal peltry is cut and then molded by the way of knitting. In the process of cutting, the size of the waterish animal peltry is decided by the request of the customer. The followed process of drying occurs in the heating room and the semi-finished product may be placed apart on different layers to avoid piling up. In the process of drying, the temperature is kept under 60°C (Celsius) for 24 hours first and then is increased gradually to 75°C (Celsius) within 36 hours, resulting the finished pet product. The space between the layers in the drying-room is 20 centimeters while the height of the heating room is 2.5 meters. The above-mentioned rotating drum is horizontally placed and is made of wood. The drum includes the following equipment: outlets 1, inlets 2, driving equipment positioned at one side of the drum. There are 12 pieces of board 3 inside the drum.

### B. Embodiment 2

The raw material is a cowhide. The cowhide is cut into four layers by machine after being defatted by a plane. Then the cowhide that weighs 750 kilograms is placed into the rotating drum, and at the same time, intenerating-reagent that weighs 21 kilograms and water that weighs 130 kilograms are placed into the drum too. The drum is started to rotate and kept rotating at the speed of 10 rpm for 60 minutes. Then, the residue is drained out of the drum. Degreasing reagent that weighs 8 kilograms and water weighing 135 kilograms are placed in the drum before the drum gets restarted. Then the drum is kept rotating at the speed of 10 rpm for 50 minutes. After the wastewater is drained out, the process of rinsing follows until the animal peltry's pH value is 7. Then emending color reagent weighing 160 kilograms and water weighing 80 kilograms are placed into the drum. The drum is kept at the speed of 10 rpm for 240 minutes. The drum is the same as in Embodiment 1. The achieved white waterish animal peltry then is goes through the process of waterish grainy animal peltry molding. The process of waterish grainy animal peltry molding includes the procedure of drying off water from the waterish animal peltry, crumbling into smash pieces (every piece is less than 7 millimeters), agglutinating with adhesive and then molding through pressing or squeezing with machine. The adhesive is obtained by mixing sticky rice powder that weighs 96 kilograms, glutin that weighs 2 kilograms, and water that weighs 71 kilograms in a puddler. The edible pigment and monosodium glutamate are added into the adhesive to make the pet product more pleasant tasting. The step of post-treatment is then followed. The process of drying occurs in a heating room and the semi-finished product is placed apart on different layers to avoid piling up. In the process of drying, the temperature is kept under 40°C (Celsius) for 36 hours first, then is increased gradually to 70°C (Celsius) within 40 hours, resulting a finished pet product. The amount of water the product contains is 12%. The weight of the finished pet product is about 180 kilograms. The finished pet product may be smoked to meet the requirements of the customer. Because the pet product weighs too much, the product may be divided into four shares and be smoked separately. The weight of the smoking fuel that needed is 3.7 kilograms in all. The smoking fuel is made of sawdust that weighs 2 kilograms and homemade sucrose that weighs 1.1 kilograms and white granulated sugar weighing 0.7 kilogram. In the process of smoking, the smoking fuel is mixed with water that weighs 0.3 kilogram first, and then the temperature is kept at 95°C (Celsius) for 10 minutes, resulting a smoked pet product is achieved. The smoking stove used is shown in FIGS. 4 and 5. The smoking stove includes a door 11, an entrance/exit 12 for the animal peltry product, a vent 13 whose diameter is 0.3 meter and which is positioned at the top of the smoking stove, a vehiclel4, layers of shelves 15 for placing animal peltry products (animal peltry products may be carried into and out from the smoking stove by the vehicle 14 through a pair of trajectories 16), a tray 17 under the vehicle 14 of the stove for placing the smoking fuel, a heater 18 under the tray 17. There are four layers of shelves 15 and the space between the shelves is 0.26 meter. The space between the tray and the lowest shelves is 0.65 meter.

### C. Embodiment 3

The raw material is a pig hide with a weight of 1000 kilograms. The process of defatting and delaminating is the same as in Embodiment 1. In the process of intenerating, intenerating-reagent weighing 25 kilograms and water weighing 166 kilograms are needed. The step of pretreatment occurs in the rotating drum and the drum is kept rotating at the speed of 12 rpm for 40 minute. Then the pig peltry is rinsed until its pH value is 7. The length of the rotating drum is 2.5 meters and the diameter is 2.9 meters. There are stakes 4 with a height of 23 centimeters (see FIG. 3). The drum is made of plastic. Then dry animal peltry molding is followed. The process of dry animal peltry molding includes the process of sun-drying the waterish animal peltry until its thickness is 1 millimeter, cutting it into different sizes, and then molding by the way of pressing with machine. Alternatively, the process of dry animal peltry molding includes the process of sun-drying, cutting, soaking for 5 minutes and then knitting by hand. In the process of making a twist pet product, the width of the animal peltry is from 0.9 to 12 centimeters to make the appearance of product more attractive.

### D. Embodiment 4

The raw material is a cowhide that weighs 750 kilograms. The process of defatting and delaminating is the same as in Embodiment 1. In the process of intenerating, intenerating-reagent weighing 16 kilograms and water weighing 177 kilograms are needed. The step of pretreatment occurs in the rotating drum and the drum is kept rotating at the speed of 8 rpm for 70 minute. The process of defatting is omitted. Then, the cowhide is rinsed until its pH value is equal to 7. Then, the process of drying grainy animal peltry molding is followed. The process of molding includes the procedure of sun-drying the waterish animal, crumbling it into smash pieces (each piece is less than 7 millimeters), agglutinating with adhesive, and molding through pressing or squeezing out with machine. The adhesive is made from sticky rice powder that weighs 58 kilograms, glutin that weighs 1 kilogram, and water that weighs 46 kilograms mixed in a puddler. Edible pigment and monosodium glutamate may be added into the adhesive to make the pet product more pleasant tasting. The semi-finished pet product may then be placed in animal peltry to make all kinds of shape by hand-knitting. Then the step of post-treatment is followed. The process of drying occurs in a heating room and the semi-product may be placed apart on different layers to prevent the semi-product from piling up. In the process of drying, the temperature is kept at 35°C (Celsius) for 30 hours first, then is increased gradually to 70°C (Celsius) within 48 hours, obtaining the finished pet product. The finished product may be smoked. Because the pet product weighs too much, the pet product may be divided into four shares and be smoked separately. The weight of the smoking fuel that needed is 5.8 kilograms in all. The smoking fuel is made of sawdust that weighs 3 kilograms, cane sugar that weighs 1.5 kilograms, and white granulated sugar that weighs 1.3 kilograms. In the process of smoking, the smoking fuel is mixed with water that weighs 0.3 kilogram first. Then, the temperature is kept at 90°C (Celsius) for 10 minutes, resulting a smoked pet product. The smoking stove is the same as in Embodiment 2. The rotating drum is the same as in Embodiment 3.

## Claims

1. A method for processing a pet product, comprising steps of pretreatment, molding and post-treatment of a second and/or a deeper layer of animal peltry, wherein:
said step of pretreatment comprising the following processes:
delaminating said animal peltry;
intenerating said animal peltry with intenerating-reagent; and
rinsing said animal peltry with water until a pH value of said animal peltry is between 5 and 8, said intenerating and said rinsing occurring in a rotation drum;
said step of molding for obtaining a semi-finished pet product from said animal peltry by one of a waterish molding method and a dry molding method,
said waterish molding method being one of a process of waterish animal peltry molding and a process of waterish grainy animal peltry molding, said process of waterish animal peltry molding comprising dripping off water from waterish animal peltry, cutting said waterish animal peltry, and molding said waterish animal peltry by way of knitting, said process of waterish grainy animal peltry molding including dripping off water from said waterish animal peltry, crumbling said waterish animal peltry into smash pieces, agglutinating said waterish animal peltry with adhesive, and molding said waterish animal peltry by way of pressing or squeezing with a machine, each of said smash pieces being less than 7 millimeters;
said dry molding method being one of a process of dry animal peltry molding and a process of dry grainy animal peltry molding, said process of dry animal peltry molding including sun-drying, cutting, and soaking said waterish animal peltry, and molding said waterish animal peltry by way of pressing with a machine or knitting; said process of drying grainy animal peltry molding including sundrying said waterish animal peltry, crumbling said waterish animal peltry into smash pieces, agglutinating said waterish animal peltry with adhesive, molding said waterish animal peltry by way of pressing or squeezing out with a machine, each of said smash pieces being less than 7 millimeters; and
said step of post-treatment comprising sun-drying or drying said semi-finished pet product or drying said semi-finished pet product until said semi-finished pet product contains less than 15% water.

2. The method of claim 1, wherein said second and said deeper layer are between 3 to 6.5 millimeters thick.

3. The method of claim 1, wherein in said process of waterish animal peltry molding or said process of dry animal peltry molding, a length of said waterish animal peltry is from 16 to 140 centimeters, and a width of said waterish animal peltry is from 2.5 to 20 centimeters.

4. The method of claim 1, wherein in said process of dry animal peltry molding, a thickness of dry animal peltry is from 0.8 to 2 millimeters after sun-drying.

5. The method of claim 1, wherein in said process of dry animal peltry molding, a width of dry animal peltry is from 0.9 millimeter to 12 centimeters.

6. The method of claim 1, wherein in the step of pretreatment, the rotation speed of said rotation drum is from 7 to 12 rpm.

7. The method of claim 1, wherein in said intenerating, a ratio among said animal peltry, said intenerating-reagent and said water is equal to (75-85) shares / (1.5-2.5) shares / (10-20) shares, said share being defined by weight.

8. The method of claim 1, wherein said step of pretreatment further comprising, between said intenerating and said rinsing, a process of degreasing with a ratio among said animal peltry, degreasing-reagent and water being (90-100) shares /(0.5-1.5) share / (11-20) shares, said share being defined by weight, said rotation drum being kept rotating for 40-60 minutes in said process of degreasing.

9. The method of claim 1, wherein in said process of waterish grainy animal peltry molding or said process of dry grainy animal peltry molding, said adhesive comprising sticky rice powder or edible tapioca, a ratio among said sticky rice powder or said edible tapioca, glutin and water is (70-80) shares / (1-2) shares / (50-60) shares in said adhesive, a ratio between grainy peltry and said adhesive is (75-90) shares / (10-25) shares, said share being defined by weight.

10. The method of claim 1, wherein in said process of dry animal peltry molding, said dry animal peltry is kept soaking for 2-10 minutes.

11. The method of claim 1, wherein in said process of dry animal peltry molding, the amount of water said animal peltry contains is 25-40% by weight after said soaking.

12. The method of claim 1, wherein in said process of waterish grainy animal peltry molding or said process of drying grainy animal peltry molding, color of said animal peltry is changed when agglutinating.

13. The method of claim 1, wherein in said process of waterish grainy animal peltry molding or said process of drying grainy animal peltry molding, said animal peltry is flavored when agglutinating.

14. The method of claim 1, wherein in said step of post-treatment, said drying including two stages: first, a temperature is kept between 35-65 °C (Celsius) for 24-48 hours, and then said temperature is gradually increased to 75 °C (Celsius) within 36-48 hours.

15. The method of claim 1, wherein said step of pretreatment further comprising a process of emending color of said animal peltry, wherein when a ratio among said animal peltry, emending color reagent, and water is (80-90) shares / (1.2-1.8) share / (10-15) shares, said share being defined by weight, then said animal peltry is a true color waterish animal peltry, when a ratio among said animal peltry, emending color reagent, and water is (80-90) shares / (12-20) shares / (6-15) shares, said share being defined by weight, then said animal peltry is a white color waterish animal peltry, said process of emending color occurring in said rotation drum.

16. The method of claim 15, wherein said emending color reagent is H₂O₂.

17. The method of claim 1, further comprising a process of smoking following said step of post-treatment, said process of smoking is performed in a smoking stove at a temperature of 80-120 °C (Celsius) for 5-30 minutes.

18. The method of claim 17, wherein said process of smoking comprising selecting a sawdust smoke fuel and a sugar fuel to make up a smoking fuel, said sawdust fuel being from 40 to 60 shares, and said sugar fuel being from 35 to 60 shares, and mixing water with said smoking fuel, a weight of said water is from 3 to 10 shares, and wherein when a weight of said animal peltry to be smoked is from 90 to 100 shares, said smoking fuel of 1 to 3 shares is needed, said share being defined by weight.

19. The method of claim 18, wherein said sugar fuel is a mixture of homemade sucrose and white granulated sugar, said homemade sucrose being from 20 shares to 30 shares and said white granulated sugar being from 15 to 30 shares, said share being defined by weight.

## Patentansprüche

1. Methode für das Verarbeiten eines Hausstierprodukts, umfassend die Schritte des Vorbehandelns, Formens und Nachbehandelns einer zweiten und/oder tieferen Schicht von Tierpelz, wobei
der Schritt des Vorbehandelns folgende Verfahren umfasst:
Delaminieren des Tierpelzes;
Weichmachen des Tierpelzes mit weichmachendem Reagenz; und
Spülen des Tierpelzes mit Wasser bis zu einem pH-Wert des Tierpelzes zwischen 5 und 8,
wobei das Weichmachen und Spülen in einer Rotationstrommel stattfinden;
wobei der Schritt des Formens zum Erhalten eines halbfertigen Haustierprodukts aus dem Tierpelz durch eine von einer wässrigen Formmethode und einer trockenen Formmethode erfolgt,
wobei die wässrige Formmethode eine von einem Verfahren des wässrigen Tierpelzformens und einem Verfahren des wässrigen körnigen Tierpelzformens ist, wobei das Verfahren des wässrigen Tierpelzformens das Abtropfen von Wasser von wässrigem Tierpelz, das Schneiden des wässrigen Tierpelzes und das Formen des wässrigen Tierpelzes durch Stricken umfasst, wobei das Verfahren des wässrigen körnigen Tierpelzformens das Abtropfen von Wasser von dem wässrigen Tierpelz, das Zerkrümeln des wässrigen Tierpelzes zu kleinen Stücken, das Agglutinieren des wässrigen Tierpelzes mit Klebstoff und das Formen des wässrigen Tierpelzes durch Pressen oder Quetschen mit einer Maschine umfasst, wobei jedes der zerschmetterten Stücke weniger als 7 Millimeter groß ist;
wobei das trockene Formverfahren eines von einem Verfahren des trockenen Tierpelzformens und einem Verfahren des trockenen körnigen Tierpelzformens ist, wobei das Verfahren des trockenen Tierpelzformens das Trocknen an der Sonne, Zerschneiden und Einweichen des wässrigen Tierpelzes und Formen des wässrigen Tierpelzes durch Pressen mit einem Maschine oder Stricken umfasst; wobei das Verfahren des trockenen körnigem Tierpelzformens das Trocknen an der Sonne des wässrigen Tierpelzes, das Zerkrümeln des wässrigen Tierpelzes in kleine Stücke, das Agglutinieren des wässrigen Tierpelzes mit Klebstoff, das Formen des wässrigen Tierpelzes durch Pressen oder Quetschen mit einer Maschine umfasst, wobei jedes der zerschmetterten Stücke weniger als 7 Millimeter groß ist; und
wobei der Schritt des Nachbehandelns das Trocknen an der Sonne und Trocknen des halbfertigen Haustierprodukts oder Trocknen des halbfertigen Haustierprodukts, bis das halbfertige Haustierprodukt weniger als 15 % Wasser enthält, umfasst.

2. Methode nach Anspruch 1, wobei die zweite und die tiefere Schicht zwischen 3 und 6,5 Millimeter dick sind.

3. Methode nach Anspruch 1, wobei bei dem Verfahren des wässrigen Tierpelzformens oder dem Verfahren des trockenen des Tierpelzesformens eine Länge des wässrigen Tierpelzes 16 bis 140 Zentimeter beträgt und eine Breite des wässrigen Tierpelzes 2,5 bis 20 Zentimeter beträgt.

4. Methode nach Anspruch 1, wobei bei dem Verfahren des trockenen Tierpelzformens nach dem Trocknen an der Sonne eine Dicke des trockenen Tierpelzes 0,8 bis 2 Millimeter beträgt.

5. Methode nach Anspruch 1, wobei bei dem Verfahren des trockenen Tierpelzformens eine Breite des trockenen Tierpelzes 0,9 Millimeter bis 12 Zentimeter beträgt.

6. Methode nach Anspruch 1, wobei beim Schritt der Vorbehandlung die Rotationsgeschwindigkeit 7 bis 12 UpM beträgt.

7. Methode nach Anspruch 1, wobei beim Weichmachen ein Verhältnis zwischen dem Tierpelz, dem weichmachenden Reagenz und Wasser gleich (75 - 85) Anteile/(1,5 - 2,5) Anteile/(10 - 20) Anteile beträgt, wobei der Anteil auf das Gewicht bezogen definiert wird.

8. Methode nach Anspruch 1, wobei der Schritt des Vorbehandelns des Weiteren zwischen dem Weichmachen und dem Spülen ein Verfahren zum Entfernen umfasst wobei das Verhältnis zwischen Tierpelz, Entfettungsreagenz und Wasser (90 - 100) Anteile/(0,5 - 1,5) Anteil/(11 - 20) Anteile beträgt, wobei der Anteil auf das Gewicht bezogen definiert wird, wobei die Rotationstrommel beim Entfettungsverfahren 40 - 60 Minuten lang beim Rotieren gehalten wird.

9. Methode nach Anspruch 1, wobei bei dem Verfahren des wässrigen körnigen Tierpelzformens oder dem Verfahren des trockenen körnigen Tierpelzformens der Klebstoff klebriges Reispulver oder essbares Tapiokapulver umfasst, wobei das Verhältnis zwischen klebrigem Reispulver oder essbarem Tapiokapulver, Glutin und Wasser (70 - 80) Anteile/(1 - 2) Anteil/(50 - 60) Anteile in dem Klebstoff beträgt, wobei das Verhältnis zwischen körnigem Pelz und dem Klebstoff (75 - 90) Anteile/(10 - 20) Anteile beträgt, wobei der Anteil auf das Gewicht bezogen definiert wird.

10. Methode nach Anspruch 1, wobei bei dem Verfahren des trockenen Tierpelzformens der trockene Tierpelz 2 - 10 Minuten lang eingeweicht wird.

11. Methode nach Anspruch 1, wobei bei dem Verfahren des trockenen Tierpelzformens die Menge an Wasser, die der Tierpelz enthält, nach dem Einweichen 25 - 40 Gew.-% beträgt.

12. Methode nach Anspruch 1, wobei bei dem Verfahren des wässrigen körnigen Tierpelzformens oder dem Verfahren des Trocknens des körnigen Tierpelzformlings die Farbe des Tierpelzes sich beim Agglutinieren ändert.

13. Methode nach Anspruch 1, wobei bei dem Verfahren des wässrigen körnigen Tierpelzformens oder dem Verfahren des Trocknens des körnigen Tierpelzformlings der Tierpelz beim Agglutinieren aromatisiert wird.

14. Verfahren nach Anspruch 1, wobei bei dem Schritt des Nachbehandelns das Trocknen zwei Stufen umfasst: erstens wird eine Temperatur zwischen 35 - 65 °C (Celsius) 24 - 48 Stunden lang beibehalten und dann wird die Temperatur innerhalb von 36 - 48 Stunden allmählich auf 75 °C (Celsius) erhöht.

15. Methode nach Anspruch 1, wobei der Schritt der Vorbehandlung des Weiteren ein Verfahren des Änderns der Farbe des Tierpelzes umfasst, wobei , wenn ein Verhältnis zwischen Tierpelz, veränderndem Farbreagenz und Wasser (80 -980) Anteile/(1,2 - 1,8) Anteil/(10 - 15) Anteile beträgt, wobei der Anteil auf das Gewicht bezogen definiert wird, der Tierpelz ein wässriger Tierpelz der richtigen Farbe ist, wenn ein Verhältnis zwischen Tierpelz, veränderndem Farbreagenz und Wasser (80 -980) Anteile/(12 - 20) Anteil/(6 - 15) Anteile beträgt, wobei der Anteil auf das Gewicht bezogen definiert wird, der Tierpelz ein weißer, wässriger Tierpelz ist, wobei das Verfahren des Veränderns der Farbe in einer Rotationstrommel erfolgt.

16. Methode nach Anspruch 15, wobei das verändernde Farbreagenz H₂O₂ ist.

17. Methode nach Anspruch 1, des Weiteren ein Verfahren zum Rauchen auf den Nachbehandlungsschritt hin umfassend, wobei das Verfahren des Rauchens 5 - 30 Minuten lang in einem Räucherofen bei einer Temperatur von 80 - 120 °C (Celsius) durchgeführt wird.

18. Methode nach Anspruch 17, wobei das Verfahren des Rauchens das Auswählen eines Sägemehlbrennstoffs und eines Zuckerbrennstoffs zum Herstellen eines Räucherbrennstoffs , wobei der Sägemehlbrennstoff 40 bis 60 Anteile und der Zuckerbrennstoff 35 bis 60 Anteile beträgt, und Mischen von Wasser mit dem Räucherbrennstoff umfasst, ein Gewicht von Wasser 3 bis 10 Anteile beträgt und wobei, wenn ein Gewicht des Tierpelzes, der geräuchert werden soll, 90 bis 100 Anteile beträgt, der Räucherbrennstoff in 1 bis 3 Anteilen erforderlich ist, wobei der Anteil auf das Gewicht bezogen definiert wird.

19. Methode nach Anspruch 18, wobei der Zuckerbrennstoff eine Mischung von hausgemachter Saccharose und weißem Kristallzucker ist, wobei die hausgemachte Saccharose 20 Anteile bis 30 Anteile und der weiße Kristallzucker 15 bis 30 Anteile beträgt, wobei der Anteil auf das Gewicht bezogen definiert wird.

## Revendications

1. Méthode de traitement d'un produit pour animaux domestiques, comprenant les étapes du prétraitement, du moulage et du post-traitement d'une seconde couche et/ou d'une couche plus profonde de peau animale, dans laquelle :
ladite étape de prétraitement comprend les procédés suivants :
le délaminage de ladite peau animale ;
l'attendrissement de ladite peau animale avec un réactif attendrissant ; et
le rinçage de ladite peau animale avec de l'eau jusqu'à ce que la valeur du pH de ladite peau animale soit entre 5 et 8, ledit attendrissement et ledit rinçage étant effectués dans un tambour rotatif ;
ladite étape du moulage pour obtenir un produit semi-fini pour animaux domestiques à partir de ladite peau animale par une d'une méthode de moulage humide et d'une méthode de moulage à sec,
ladite méthode de moulage humide étant l'un d'un procédé de moulage humide de la peau animale et d'un procédé de moulage humide de la peau animale granuleuse, ledit procédé de moulage humide de la peau animale comprenant l'égouttement de l'eau provenant de la peau animale humide, la coupe de ladite peau animale humide, et le moulage de ladite peau animale humide par tricotage, ledit procédé de moulage de la peau animale granuleuse humide incluant l'égouttement de l'eau provenant de ladite peau animale humide, l'émiettage de ladite peau animale humide en morceaux broyés, l'agglutination de ladite peau animale humide avec de l'adhésif, et le moulage de ladite peau animale humide par pression ou par expression avec une machine, chacun desdits morceaux broyés étant de moins de 7 millimètres ;
ladite méthode de moulage à sec étant un d'un procédé de moulage de la peau animale sèche et d'un procédé de moulage de la peau animale granuleuse sèche, ledit procédé de moulage de la peau animale sèche incluant le séchage au soleil, la coupe et le trempage de ladite peau animale humide, et le moulage de ladite peau animale humide par pression avec une machine ou par tricotage ; ledit procédé de moulage de la peau animale granuleuse sèche incluant le séchage au soleil de ladite peau animale humide, l'émiettage de ladite peau animale humide en des morceaux broyés, l'agglutination de ladite peau animale humide avec de l'adhésif, le moulage de ladite peau animale humide par pression ou expression avec une machine, chacun desdits morceaux broyés étant de moins de 7 millimètres ; et
ladite étape de post-traitement comprenant le séchage au soleil ou le séchage dudit produit semi-fini pour animaux domestiques ou le séchage dudit produit semi-fini pour animaux domestiques jusqu'à ce que ledit produit semi-fini pour animaux domestiques contienne moins de 15 % d'eau.

2. Méthode selon la revendication 1, dans laquelle ladite seconde couche et ladite couche plus profonde ont une épaisseur comprise entre 3 et 6,5 millimètres.

3. Méthode selon la revendication 1, dans laquelle dans ledit procédé de moulage de la peau animale humide ou ledit procédé de moulage de la peau animale sèche, une longueur de ladite peau animale humide est comprise entre 16 et 140 centimètres, et une largeur de ladite peau animale humide est comprise entre 2,5 et 20 centimètres.

4. Méthode selon la revendication 1, dans laquelle dans ledit procédé de moulage de la peau animale sèche, une épaisseur de la peau animale sèche est comprise entre 0,8 et 2 millimètres après le séchage au soleil.

5. Méthode selon la revendication 1, dans laquelle dans ledit procédé de moulage de la peau animale sèche, une largeur de la peau animale sèche est comprise entre 0,9 millimètre et 12 centimètres.

6. Méthode selon la revendication 1, dans laquelle dans l'étape de prétraitement, la vitesse de rotation dudit tambour rotatif est comprise entre 7 et 12 tours à la minute.

7. Méthode selon la revendication 1, dans laquelle dans ledit attendrissement, un rapport entre ladite peau animale, ledit réactif attendrissant et ladite eau est égal à (75 - 85) parts / (1,5 - 2,5) parts / (10 - 20) parts, ladite part étant définie par le poids.

8. Méthode selon la revendication 1, dans laquelle ladite étape de prétraitement comprend, en outre, entre ledit attendrissement et ledit rinçage, un procédé de dégraissage avec un rapport entre ladite peau animale, le réactif dégraissant et l'eau de (90 - 100) parts / (0,5 - 1,5) parts / (11 - 20) parts, ladite part étant définie par le poids, ledit tambour rotatif étant gardé en rotation pendant 40 à 60 minutes dans ledit procédé de dégraissage.

9. Méthode selon la revendication 1, dans laquelle dans ledit procédé de moulage de la peau animale granuleuse humide ou ledit procédé de moulage de la peau animale granuleuse sèche, ledit adhésif comprenant de la poudre de riz collante ou du tapioca comestible, un rapport entre ladite poudre de riz collante ou ledit tapioca comestible, le gluten et l'eau est de (70 - 80) parts / (1 - 2) parts / (50 - 60) parts dans ledit adhésif, un rapport entre la peau animale granuleuse et ledit adhésif est de (75 - 90) parts / (10 - 25) parts, ladite part étant définie par le poids.

10. Méthode selon la revendication 1, dans laquelle dans ledit procédé de moulage de la peau animale sèche, on laisse tremper ladite peau animale sèche pendant 2 à 10 minutes.

11. Méthode selon la revendication 1, dans laquelle dans ledit procédé de moulage de la peau animale sèche, la quantité d'eau que contient la peau animale est de 25 à 40 % en poids après ledit trempage.

12. Méthode selon la revendication 1, dans laquelle dans ledit procédé de moulage de la peau animale granuleuse humide ou dudit procédé de moulage de la peau animale sèche, la couleur de ladite peau animale est modifiée lors de l'agglutination.

13. Méthode selon la revendication 1, dans laquelle dans ledit procédé de moulage de la peau animale granuleuse humide ou ledit procédé de moulage de la peau animale sèche, ladite peau animale est parfumée lors de l'agglutination.

14. Méthode selon la revendication 1, dans laquelle dans ladite étape de post-traitement, ledit séchage inclut deux stades : en premier lieu, une température est maintenue entre 35 et 65 °C (Celsius) pendant 24 à 48 heures, puis ladite température est progressivement augmentée jusqu'à 75 °C (Celsius) dans les 36 à 48 heures.

15. Méthode selon la revendication 1, dans laquelle ladite étape de prétraitement comprend, en outre, un procédé de rectification de la couleur de ladite peau animale, dans lequel quand un rapport entre ladite peau animale, le réactif rectificateur de la couleur et l'eau est de (80 - 90) parts / (1,2 - 1,8) parts / (10 - 15) parts, ladite part étant définie par le poids, alors ladite peau animale est une peau animale humide de couleur authentique, quand un rapport entre ladite peau animale, le réactif rectificateur de la couleur et l'eau est de (80 - 90) parts / (12 - 20) parts / (6 - 15) parts, ladite part étant définie par le poids, alors ladite peau animale est une peau animale humide de couleur blanche, ledit procédé de rectification de la couleur se déroulant dans ledit tambour rotatif.

16. Méthode selon la revendication 15, dans laquelle ledit réactif rectificateur de la couleur est le H₂O₂.

17. Méthode selon la revendication 1, comprenant, en outre, un procédé de fumage succédant à ladite étape de post-traitement, ledit procédé de fumage étant réalisé dans un poêle de fumage à une température comprise entre 80 et 120 °C (Celsius) pendant 5 à 30 minutes.

18. Méthode selon la revendication 17, dans laquelle ledit procédé de fumage comprenant la sélection d'un carburant de fumage à base de sciure et d'un carburant à base de sucre pour obtenir un carburant de fumage, ledit carburant à base de sciure constituant entre 40 et 60 parts, et ledit carburant à base de sucre constituant entre 35 et 60 parts, et le mélange d'eau avec ledit carburant de fumage, un poids de ladite eau est constitué d'entre 3 et 10 parts, et dans lequel quand un poids de ladite peau animale à fumer est constitué d'entre 90 et 100 parts, ledit carburant de fumage de 1 à 3 parts est requis, ladite part étant définie par le poids.

19. Méthode selon la revendication 18, dans laquelle ledit carburant à base de sucre est un mélange de saccharose fait maison et de sucre cristallisé blanc, ledit saccharose fait maison constituant entre 20 et 30 parts et ledit sucre cristallisé blanc constituant entre 15 et 30 parts, ladite part étant définie par le poids.
